# EUROPEAN PATENT SPECIFICATION

(11) **EP 1 943 117 B1**
(45) Date of publication and mention of the grant of the patent: **24.08.2011**
(21) Application number: 06825306.1
(22) Date of filing: 02.10.2006
(51) Int. Cl.: B60G 17/018, H04L 29/06, B60R 16/023

(54) **SECURE ACTIVE SUSPENSION SYSTEM**
SICHERES AKTIVES AUFHÄNGUNGSSYSTEM
SYSTEME DE SUSPENSION ACTIF SUR

(30) Priority: 04.11.2005 US 733960 P
(43) Date of publication of application: 16.07.2008
(73) Proprietor: Bose Corporation, Framingham, Massachusetts 01701 (US)
(72) Inventor: LACKRITZ, Neal M., Southborough, MA 01772 (US)
(74) Representative: Brunner, Michael John
(86) International application number: PCT/US2006/038319
(87) International publication number: WO 2007/053256

(56) References cited:
- EP-A2- 0 723 896
- EP-A2- 0 724 343
- EP-A2- 1 028 536
- DE-A1- 10 332 452
- JP-A- 2003 288 623
- JP-A- 2004 352 128
- US-A1- 2002 194 476
- US-A1- 2004 003 243

## Description

### TECHNICAL FIELD

This disclosure relates to active suspension systems, such as those used in vehicles.

### BACKGROUND

Active vehicle suspension systems employ actuators coupled between the vehicle's wheels and the vehicle body, to continuously control motion of the wheels relative to the vehicle body as the wheels encounter changing road and driving conditions. By constantly adjusting the wheel position, velocity, and or acceleration to respond to varying road and driving conditions, an active suspension system can offer superior handling, road feel, responsiveness and safety to a conventional passive suspension system.

### SUMMARY

In one aspect the invention feature an active suspension system in which some or all of the data that is exchanged between the system's components (e.g., control commands sent from a controller to an actuator) is encrypted.

In another aspect, the invention features an active suspension system for a vehicle that includes a first component (e.g., a controller element) in communication with a second component (e.g., an actuator assembly) using a network of any known topology (e.g., bus, ring, point-to-point, etc.). The first component is configured to encrypt at least some of the data (e.g., control commands) it transmits to the second component.

Embodiments may include one or more of the following features. The second component may be configured to decrypt the data, and an private (or secret) key or public key encryption scheme may be used for the encryption.

The second component may be a linear actuator and may include motion sensors (e.g., position, velocity, acceleration) that feed back motion information to the first component (e.g., a controller). The sensor information that is fed back to the first component may also be encrypted.

In another aspect, the invention features an active suspension system that includes a first actuator that includes a stator coupled to the body of the vehicle and an armature coupled to a first wheel of the vehicle, and a controller configured to issue control commands to the first actuator using a network. The controller is configured to encrypt the control commands prior to transmitting the control commands to the first actuator.

In another aspect, the invention features a method for managing encryption keys for a mass-produced active suspension system, wherein each mass-produced active suspension system includes one or more components that require an encryption key. The method includes using a first encryption key for a first set of suspension system components, using a second encryption key for component for a second set of suspension system components, and maintaining a database for tracking encryption keys that are used in the first and second sets of components.

Embodiments may include one or more of the following. The first encryption key may be used for suspension system components supplied to a first automobile manufacturer, a first make of vehicle, or a first model of vehicle while the second encryption key may be used for suspension system components supplied to a second automobile manufacturer, a second make of vehicle, or a second model of vehicle. Similarly, the first encryption key may used for a first number of suspension systems components supplied over a first time period, while the second set of encryption key may be used for a second number suspension system components supplied over a second time period.

### DESCRIPTION OF DRAWINGS

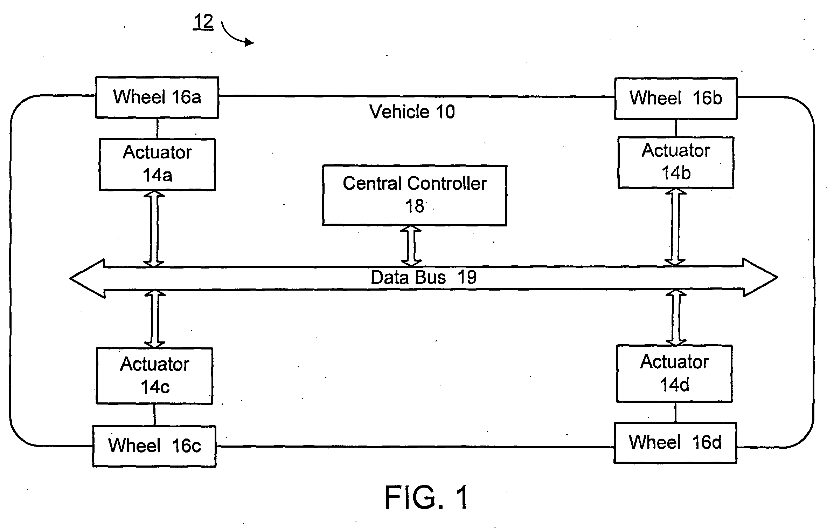

FIGS. 1-3 are each block diagrams of a top view of a vehicle with an active suspension system.

### DETAILED DESCRIPTION

Referring to FIG. 1, a vehicle 10 includes an active suspension system 12, such as an active suspension system disclosed in U.S. Patent No. 4,981,309, titled "Electromechanical Transducing Along a Path" . The active suspension system 12 includes four linear actuators 14a-14d that are each mechanically coupled to one of the vehicle's wheels 16a-16d. In some implementations, the actuators are linear motors that include a stator mounted to the body of the vehicle and a moving armature that is mounted to the wheel. Sensors are mounted in various locations near each wheel (or at other locations in the vehicle) to measure absolute or relative (to the vehicle body) displacement, velocity, and/or acceleration of the wheel. Typically, the vertical component of displacement, velocity and/or acceleration is measured, but more complex vehicle control systems may require motion to be sensed in other axes as well. Corresponding sensors may be located on the vehicle body to measure motion of the vehicle body.

The active suspension system 12 also includes a central controller 18 that is in communication with each of the four actuators over a data bus 19, such as a FlexRay™ optical or electrical bus, a MOST bus, or other known bus technology.

As the vehicle 10 is driven over a road surface, the central controller receives motion information (such as acceleration signals) from each of the sensors and sends control commands to each of the four actuators 14a-14c. The control commands cause the actuators to output controlled forces, which in turn to cause the vehicle body to respond in a desired manner to road disturbances. For example, a controller may issue commands to actuators to minimize the vertical acceleration of the vehicle body as the wheels of the vehicle travel over uneven surfaces (e.g., pot holes, banked road surface, etc.) or as the vehicle performs a turning maneuver.

In a typical vehicle active suspension system, the actuators are capable of generating substantial amounts of force to maintain control over motion of the body of the vehicle as the vehicle's wheels travel over uneven surfaces or when the vehicle performs a turning maneuver. Because the actuators are capable of generating such force, they can be controlled to cause the vehicle to perform dangerous maneuvers. For example, in some implementations, the actuators are powerful enough to cause some or all of the vehicle's wheels to lose contact with the road surface while the vehicle is stopped or traveling on a flat roadway. Controlling the actuators in this way creates safety concerns for people located both inside and outside of the vehicle, and, therefore, may not be a capability that is desired in a commercially-available vehicle. While the controller that is supplied in a commercially-sold active suspension system may not be programmed with a control sequence to cause the vehicle to "jump" or perform other dangerous maneuvers, there is risk that persons may re-program the controller or install other controllers to enable this capability.

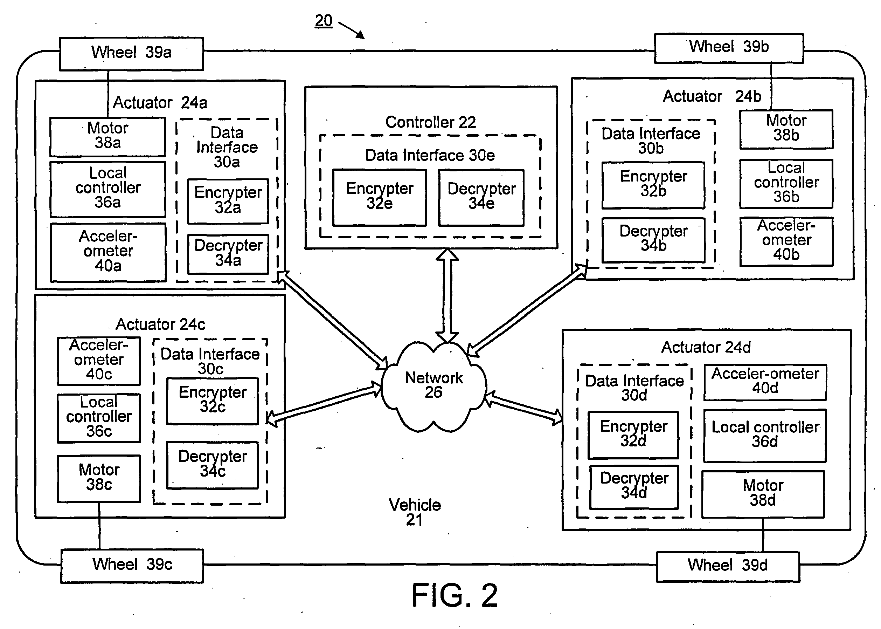

To prevent unsafe or undesirable control of an active suspension system, an active suspension system encrypts control commands and other information exchanged between the system's components. For example, as shown in FIG. 2, an active suspension system 20 for vehicle 21 includes a controller 22 that is in communication with each of four wheel actuators 24a-24d using a network 26. The controller 22 and each actuator 24a-24d each have a data interface 30a-30e that transmits and receives data such as control commands and sensor feedback information using the network 26. Each data interface 30a-30e includes an encryption module 32a-32e and a decryption module 34a-34e to ensure secure communication between the controller and actuator. In addition, each actuator includes a local controller 36a-36d operably coupled to a motor 38a-38d for executing control commands sent by the central controller to move the respective wheels 39a-39d. Motion sensors 40a-40d in one embodiment measure acceleration in the vertical direction and feed the acceleration data back to the controller 22 using the network 26. In some implementations, the data interface, local controller, and other actuator electronics are located in a housing of the motor's stator to protect the actuator's electronics from the road environment.

The encryption modules 32a-32e encrypt data (e.g., control commands and acceleration data) prior to being sent on the network. When a system component, such as one of the actuators, receives the encrypted data, it decrypts the data using its decryption module 34a-34e. By encrypting the data exchanged between the system's components, the risk of altering the system's control scheme is reduced.

The encryption and decryption modules may be implemented in hardware, software or a combination thereof and may use any known encryption scheme, including private key encryption or public key encryption. The network 26 over which data is exchanged among system components may be of any known topology (e.g., point-to-point, bus, star, ring, etc.) and may use any appropriate synchronous or asynchronous communications protocol.

For example, the network 26 shown in FIG. 2 may comprise a FlexRay optical fiber bus that uses the FlexRay communications protocol, which is currently defined by the FlexRay consortium (www.flexray.com) as follows:

| Header | Payload | Trailer |
|---|---|---|
| (5 bytes) | (0-256 bytes) | (3 bytes) |

The payload of the FlexRay packet, which contains the data that is to be transported between system components, may be encrypted using a shared secret key or a public key of the component to which the data is being sent.

In an active suspension system that uses a private key encryption scheme, each of the components (e.g., the controller and actuators) use the same secret key to encrypt and decrypt data. A private key encryption scheme, such as the Data Encryption Standard (DES), requires a system for managing the secret key(s) used in mass-produced active suspension systems.

Key management can be handled in a variety of ways. For example, a supplier of active suspension systems may use a single secret key for all components produced by the supplier. However, if this shared secret key is revealed, the integrity of all suspension systems produced by that supplier are jeopardized.

To reduce the harm in a secret key being revealed, the supplier may use different secret keys for components of active suspension systems supplied to different automobile manufacturers (e.g., one key for General Motors vehicles and a second key for Ford vehicles), or different keys for components of active suspension systems supplied for different makes (e.g., one key for General Motors Chevrolet vehicle and a second key for General Motors Cadillac vehicles), different models (e.g., one key for Cadillac STS vehicles and a second key for Cadillac Escalade vehicles), or specific individual vehicles. The supplier may also periodically change the secret keys that are incorporated into the active suspension systems. For example, the supplier may use one secret key in year 1 and then switch to a second secret key in year 2. Or the supplier may change secret keys after manufacturing a certain number of units (e.g., the components of the first 1,000 active suspension systems manufactured by the supplier include one secret key, while the components of the next 1,000 active suspension systems have a second secret key, and so on).

In order for a supplier to replace broken or defective components, the supplier preferably maintains a secure database that tracks the secret keys that have been used in the active suspension components sold by the supplier. For example, if a supplier changes secret keys each 1,000 active suspension systems produced, the supplier would keep a database that matches private keys to ranges of component serial numbers. If a component broke or failed, the suppler could use the database to obtain the key that was used in the particular active suspension system and supply a new component (e.g., a new actuator) with the proper secret key.

In some implementations, a supplier of active suspension systems may use a public key encryption scheme. In a public key scheme, a "public key" associated with the component to which data is being sent is used to encrypt data by the component sending the data, while a private key associated with the receiving component is required to decrypt the message. Because a system that uses a public key encryption scheme still requires the use of private (or secret) keys, a key management scheme is required for maintaining and tracking the private keys that are used in components sold by a supplier.

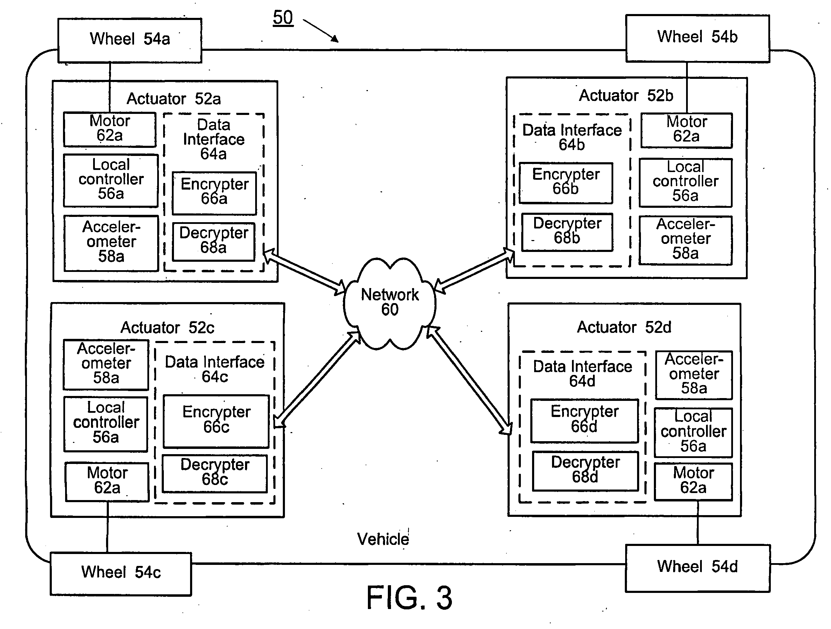

In some implementations, an active suspension system may use a distributed control scheme, rather than a centralized control scheme. In such a system, communication between the system's components may be encrypted. For example, as shown in FIG. 3, a vehicle active suspension system 50 includes four actuators 52a-52d that each control a wheel 54a-54d. Rather than a central controller, four local controllers 56a-56b receive motion information from each of four sensors 58a-58b using a network 60 and control their respective motor 62a-62d to maintain the body of the vehicle relatively level. Each actuator includes a data interface 64a-64d that includes an encryption and decryption module 66a-66d, 68a-68d for secure communication amongst the system's 50 components.

A number of embodiments of the invention have been described. Nevertheless, it will be understood that various modifications may be made without departing from the scope of the invention. For example, while two-way secure communication has been illustrated in FIGS. 2-3, some implementations may have secure one-way communication (e.g., secure communication from a controller to the actuators, but unsecure communication from the actuators to the controller). Similarly, some implementations may only secure certain types of communication (e.g., only control commands are encrypted while other data, such as sensor data, is clear).

## Claims

1. An active suspension system (20,50) for a vehicle comprising:
a first component;
a second component in communication with the first component using a network (26,60), **characterised in that** the first component is configured to encrypt at least some of the data transmitted by the first component to the second component using the network (26,60)
wherein the data transmitted from the first component to the second component comprises encrypted control commands.

2. The active suspension system of claim 1, wherein the first component comprises a central controller (22).

3. The active suspension system of claim 2, wherein the second component comprises an actuator (24a-24d) mechanically coupled to a wheel (39a-39d) of the vehicle.

4. The active suspension system of claim 1, wherein the first component comprises an actuator (24a-24d).

5. The active suspension system of claim 1, wherein the second component is configured to decrypt the encrypted data received from the first component.

6. The active suspension system of claim 1, wherein the second component is configured to encrypt at least some of the data transmitted by the second component to the first component using the network (26,60).

7. The active suspension system of claim 1, wherein the data transmitted from the first component to the second component comprise sensor feedback information.

8. The active suspension system of claim 7, wherein the sensor feedback information is encrypted.

9. The active suspension system of claim 1, wherein the network (26,60) comprises a data bus.

10. The active suspension system of claim 1, wherein the network (26,60) comprises a ring topology.

11. The active suspension system of claim 1, wherein the network (26,60) comprises a point-to-point topology.

12. The active suspension system of claim 1, wherein the first and second components are in two-way communication with each other.

13. The active suspension system of claim 3, wherein the actuator (24a-24d) includes a stator coupled to the body of the vehicle and an armature coupled to the wheel of the vehicle.

14. A method for managing communication between a first component and a second component of an active suspension system (20,50) for a vehicle, the method **characterised by** comprising:
transmitting data between the first component and the second component using a network (26,60), wherein the data comprises encrypted control commands.

15. The method of claim 14, wherein the control commands are encrypted using encryption key.

## Patentansprüche

1. Aktives Aufhängungssystem (20, 50) für ein Fahrzeug, wobei das System Folgendes umfasst:
eine erste Komponente,
eine zweite Komponente in Kommunikation mit der ersten Komponente unter Verwendung eines Netzes (26, 60), **dadurch gekennzeichnet, dass** die erste Komponente dafür konfiguriert ist, wenigstens einige der durch die erste Komponente an die zweite Komponente unter Verwendung des Netzes (26, 60) übertragenen Daten zu verschlüsseln,
wobei die von der ersten Komponente zu der zweiten Komponente übertragenen Daten verschlüsselte Steuerkommandos umfassen.

2. Aktives Aufhängungssystem nach Anspruch 1, wobei die erste Komponente ein zentrales Steuergerät (22) umfasst.

3. Aktives Aufhängungssystem nach Anspruch 2, wobei die zweite Komponente ein mechanisch an ein Rad (39a-39d) des Fahrzeugs gekoppeltes Stellglied (24a-24d) umfasst.

4. Aktives Aufhängungssystem nach Anspruch 1, wobei die erste Komponente ein Stellglied (24a-24d) umfasst.

5. Aktives Aufhängungssystem nach Anspruch 1, wobei die zweite Komponente dafür konfiguriert ist, die von der ersten Komponente empfangenen verschlüsselten Daten zu entschlüsseln.

6. Aktives Aufhängungssystem nach Anspruch 1, wobei die zweite Komponente dafür konfiguriert ist, wenigstens einige der durch die zweite Komponente an die erste Komponente unter Verwendung des Netzes (26, 60) übertragenen Daten zu verschlüsseln.

7. Aktives Aufhängungssystem nach Anspruch 1, wobei die von der ersten Komponente zu der zweiten Komponente übertragenen Daten Sensor-Rückmeldungsinformationen umfassen.

8. Aktives Aufhängungssystem nach Anspruch 7, wobei die Sensor-Rückmeldungsinformationen verschlüsselt sind.

9. Aktives Aufhängungssystem nach Anspruch 1, wobei das Netz (26, 60) einen Datenbus umfasst.

10. Aktives Aufhängungssystem nach Anspruch 1, wobei das Netz (26, 60) eine Ringtopologie umfasst.

11. Aktives Aufhängungssystem nach Anspruch 1, wobei das Netz (26, 60) eine Punktzu-Punkt-Topologie umfasst.

12. Aktives Aufhängungssystem nach Anspruch 1, wobei sich die erste und die zweite Komponente in einer Zwei-Wege-Kommunikation miteinander befinden.

13. Aktives Aufhängungssystem nach Anspruch 3, wobei das Stellglied (24a-24d) einen an die Karosserie des Fahrzeugs gekoppelten Ständer und einen an das Rad des Fahrzeugs gekoppelten Anker umfasst.

14. Verfahren zum Verwalten der Kommunikation zwischen einer ersten Komponente und einer zweiten Komponente eines aktiven Aufhängungssystems (20, 50) für ein Fahrzeug, wobei das Verfahren **dadurch gekennzeichnet ist, dass** es Folgendes umfasst:
das Übertragen von Daten zwischen der ersten Komponente und der zweiten Komponente unter Verwendung eines Netzes (26, 60), wobei die Daten verschlüsselte Steuerkommandos umfassen.

15. Verfahren nach Anspruch 14, wobei die Steuerkommandos unter Verwendung einer Verschlüsselungsschlüssels verschlüsselt werden.

## Revendications

1. Système de suspension active (20, 50) de véhicule comprenant :
un premier composant ;
un seconde composant en communication avec la premier composant au moyen d'un réseau (26, 60) ;
**caractérisé en ce que** le premier composant est configuré pour crypter au moins certaines des données transmises par le premier composant au second composant au moyen du réseau (26, 60)
dans lequel les données transmises par le premier composant au second composant comprennent des commandes de régulation cryptées.

2. Système de suspension active selon la revendication 1, dans lequel le premier composant est une unité de commande centrale (22).

3. Système de suspension active selon la revendication 1, dans lequel le second composant comprend un actionneur (24a- 24d) couplé mécaniquement à une roue (39a-39d) du véhicule.

4. Système de suspension active selon la revendication 1, dans lequel le premier composant comprend un actionneur (24a- 24d).

5. Système de suspension active selon la revendication 1, dans lequel le second composant est configuré pour décrypter les données cryptées reçues du premier composant.

6. Système de suspension active selon la revendication 1, dans lequel le second composant est configuré pour crypter au moins certaines des données transmises par le second composant au premier composant au moyen du réseau (26, 60).

7. Système de suspension active selon la revendication 1, dans lequel les données transmises par le premier composant au second composant comprennent des informations de retour de capteurs.

8. Système de suspension active selon la revendication 7, dans lequel les informations de retour de capteurs sont cryptées.

9. Système de suspension active selon la revendication 1, dans lequel le réseau (26, 60) comprend un bus de données.

10. Système de suspension active selon la revendication 1, dans lequel le réseau (26, 60) comprend une topologie en anneau.

11. Système de suspension active selon la revendication 1, dans lequel le réseau (26, 60) comprend une topologie point à point.

12. Système de suspension active selon la revendication 1, dans lequel les premier et second composants communiquent bidirectionnellement l'un avec l'autre.

13. Système de suspension active selon la revendication 3, dans lequel l'actionneur (24a- 24d) comporte un stator couplé au corps du véhicule et un induit couplé à la roue du véhicule.

14. Procédé de gestion des communications entre un premier composant et un second composant d'un système de suspension active (20, 50) d'un véhicule, le procédé étant **caractérisé en ce qu'**il comprend :
la transmission de données entre le premier composant et le second composant au moyen d'un réseau (26, 60), les données comprenant des commandes de régulation cryptées.

15. Procédé selon la revendication 14, dans lequel les commandes de régulation sont cryptées au moyen d'une clé de cryptage.
